# EUROPEAN PATENT APPLICATION

(11) **EP 4 672 116 A1**
(43) Date of publication of application: **31.12.2025**
(21) Application number: 24306048.0
(22) Date of filing: 28.06.2024
(51) Int. Cl.: G06Q 20/10, G06Q 20/30, G06Q 20/38

(54) **METHOD FOR PERFORMING A DIGITAL CURRENCY TRANSACTION**

(71) Applicant: THALES DIS FRANCE SAS, 92190 Meudon (FR)
(72) Inventor: MARTIN, Alain, 78860 SAINT-NOM-LA-BRETECHE (FR)
(74) Representative: Grevin, Emmanuel

(57) **Abstract**

The invention is a method for performing a digital currency transaction involving a first device (40) hosting a digital currency purse (49). The first device is able to participate to offline digital currency transfers with a second device (60) hosting another digital currency purse (69), each of said purses storing one or more digital currency tokens of a first type (T1). A digital currency wallet stores one or more digital currency tokens of a second type. The digital currency transaction is performed by transferring digital currency funds between said purse (49) and said digital currency wallet through a Digital Currency Provider, DCP, (80) hosting an escrow wallet (10). The DCP updates the escrow wallet to reflect digital currency funds stored in the form of one or more tokens of first type in said first purse (49).

## Description

### (Field of the invention)

The present invention relates to methods for performing a digital currency transaction. It relates particularly to methods for managing a financial transaction in which the money amount is transferred from or to a digital currency wallet.

### (Background of the invention)

In the context of an increasing interest of central banks towards Central Bank Digital Currencies, (CBDC), CBDC experimentations run on a core ledger usually operated by a Central Bank. Often this core ledger is based on a permissioned blockchain, but not necessarily. Payments on the core ledger may be transfers from a user account to another user account or they may be token based and leverage UTXO (Unspent Transaction Output) cryptocurrency techniques.

Some propositions for CBDC rely on hardware secure devices that could be usable without network connectivity, while other propositions rely on secure devices requiring online-only schemes. In an offline CBDC system, digital cash is loaded into offline capable devices and then transferred from one user device to the other without requirement to connect online. Such an offline exchange of funds can also be implemented using tokens.

### (Summary of the Invention)

A central bank will typically mint (issue) digital money on its core ledger. In a UTXO based system, any transfer of digital cash can be traced back to the original minted token, this guaranteeing its genuineness. However, when loading digital cash from the core ledger into an offline capable device, the UTXO chain cannot continue within the device because of its limitations. For example, when the offline capable device is a smart card, it may not have sufficient memory to store a UTXO chain (that may be very long) or sufficient computing resources to process data whose size is big.

Nevertheless, a complete system should be able to both transfer digital cash from the core ledger to devices of the offline system, to enable this transfer while maintaining the integrity of the core ledger and to ensure the security and integrity of this transfer.

A challenge is how to securely interface the online system (based on a core ledger), with an offline system while maintaining the integrity of digital cash.

The invention aims at solving the above-mentioned technical problem.

An object of the present invention is a method for performing a digital currency transaction involving a first hardware device hosting a first digital currency purse. The first device is able to participate to offline digital currency transfers with a second hardware device hosting a second digital currency purse. Each of said first and second purses store one or more digital currency tokens of a first type. A digital currency wallet stores one or more digital currency tokens of a second type different from said first type. The digital currency wallet is hosted by a hardware server acting on behalf of a bank. The digital currency transaction is performed by transferring digital currency funds between said first purse and said digital currency wallet through a Digital Currency Provider (DCP) hosting an escrow wallet. The Digital Currency Provider updates the escrow wallet to reflect digital currency funds stored in the form of one or more tokens of first type in said first purse.

Advantageously, the digital currency transaction may be a transfer of a loading amount from the digital currency wallet to the first purse. The digital currency wallet may generate both a payment token of the second type reflecting the loading amount to be added to a balance of the escrow wallet and a local token of the second type which reflects a remaining amount in the digital currency wallet and may send said tokens to a core ledger. The core ledger may perform a validity check of the payment token and the local token and if the validity check is successful, the core ledger may store the payment token and the local token. The DCP may generate a load token of the first type reflecting said loading amount and may send the load token to the first device. The first digital currency purse may perform a validity check of the load token and, if the validity check is successful, may store the load token.

Advantageously, the digital currency wallet and the first purse may be both assigned to a same user.

Advantageously, the DCP may access a lookup server or a database to retrieve an identifier of the digital currency wallet by using an identifier of the first device or an identifier of the first digital currency purse.

Advantageously, the first purse may be assigned to a first user and the digital currency wallet may be assigned to a second user different from the first user.

Advantageously, the digital currency transaction may be a transfer of an unloading amount from the first purse to the digital currency wallet. The digital currency wallet and the first purse may be both assigned to a same user. The first purse may generate an unload token of the first type reflecting the unloading amount and may send said unload token to the DCP. The DCP may perform a validity check of the unload token and if the validity check is successful, the DCP may generate a payment token and local token both of the second type, the local token indicating a new balance of the digital currency wallet and the payment token reflecting the withdrawal of the unloading amount from the escrow wallet. A core ledger may receive from the DCP both said payment token and local token, perform a validity control of both the payment token and the local token and, if the validity control is successful may store the payment token and local token.

Advantageously, the digital currency transaction may be a transfer of a payment amount from the first purse to the digital currency wallet. The first purse may be assigned to a first user and the digital currency wallet may be assigned to a second user different from the first user. The first purse may generate a payment token of the first type reflecting a payment amount and may send said payment token to the DCP. The DCP may perform a validity check of the payment token and if the validity check is successful, the DCP may generate a payment token and a local token both of the second type, said payment token reflecting the update of a balance of the escrow wallet corresponding to the payment amount and said local token reflecting the update of a balance of the digital currency wallet. A core ledger may receive from the DCP both said payment token and local token and may store the payment token and local token after a successful checking that both said payment token and local token are valid.

Advantageously, the digital currency transaction may be a Central Bank Digital Currency transaction.

An object of the present invention is a system for performing a digital currency transaction involving a first hardware device hosting a first digital currency purse. The system comprises the first device and a digital currency wallet. The first device is able to participate to offline digital currency transfers with a second hardware device hosting a second digital currency purse, each of said first and second purses storing one or more digital currency tokens of a first type. The digital currency wallet uses one or more digital currency tokens of a second type different from said first type. The digital currency wallet is hosted by a hardware server acting on behalf of a bank. The system comprises a Digital Currency Provider (DCP) hosting an escrow wallet. The system is configured to perform the digital currency transaction by transferring digital currency funds between said first purse and said digital currency wallet through the DCP. The DCP is configured to update the escrow wallet to reflect digital currency funds stored in the form of one or more tokens of first type in said first purse.

Advantageously, the digital currency transaction may be a transfer of a loading amount from the digital currency wallet to the first purse. The digital currency wallet may be configured to generate both a payment token of the second type reflecting the loading amount to be added to a balance of the escrow wallet and a local token of the second type which reflects a remaining amount in the digital currency wallet and to send said payment token and local token to a core ledger. The core ledger may be configured to perform a validity check of both the payment token and the local token and if the validity check is successful, the core ledger may be configured to store the payment token and the local token. The DCP may be configured to generate a load token of the first type reflecting said loading amount and to send the load token to the first device. The first purse may be configured to perform a validity check of the load token and if the validity check is successful, to store the load token.

Advantageously, the digital currency wallet and the first purse may be both assigned to a same user.

Advantageously, the first purse may be assigned to a first user and the digital currency wallet may be assigned to a second user different from the first user.

Advantageously, the digital currency transaction may be a transfer of an unloading amount from the first purse to the digital currency wallet. The digital currency wallet and the first purse may be both assigned to a same user. The first purse may be configured to generate an unload token of the first type reflecting the unloading amount and to send said unload token to the DCP. The DCP may be configured to perform a validity check of the unload token and if the validity check is successful, the DCP may be configured to generate a payment token and local token both of the second type, the local token indicating a new balance of the digital currency wallet and the payment token reflecting the withdrawal of the unloading amount from the escrow wallet. A core ledger may be configured to receive from the DCP both said payment token and local token and to store the payment token and local token after executing a successful check of their validity.

Advantageously, the digital currency transaction may be a transfer of a payment amount from the first purse to the digital currency wallet. The first purse may be assigned to a first user and the digital currency wallet may be assigned to a second user different from the first user. The first purse may be configured to generate a payment token of the first type reflecting a payment amount and to send said payment token to the DCP. The DCP may be configured to perform a validity check of the payment token and if the validity check is successful, the DCP may be configured to generate a payment token and a local token both of the second type, said payment token reflecting the update of a balance of the escrow wallet corresponding to the payment amount and said local token reflecting the update of a balance of the digital currency wallet. A core ledger may be configured to receive from the DCP both said payment token and local token and to store the payment token and local token after executing a successful check of their validity.

### (Brief description of the drawings)

Other characteristics and advantages of the present invention will emerge more clearly from a reading of the following description of a number of preferred embodiments of the invention with reference to the corresponding accompanying drawings in which:
Fig. 1 shows a first exemplary flow diagram for managing loading of digital money into an offline capable device according to an example of the invention,
Fig. 2 shows a first exemplary flow diagram for managing unloading of digital money from an offline capable device according to an example of the invention,
Fig. 3 shows a second exemplary flow diagram for managing loading of digital money into an offline capable device according to an example of the invention,
Fig. 4 shows a first exemplary flow diagram for managing payment using digital money stored into an offline capable device according to an example of the invention; and
Fig. 5 shows a diagram of architecture of a system for managing digital currency transactions according to an example of the invention.

### (Detailed description of the preferred embodiments)

The invention may apply to digital currency purses hosted in many kinds of hardware payment instrument. The invention is well suited for digital currency purses embedded in smart cards. It can also apply to digital currency purses hosted in physical secure devices with different form factors such as smartphones and wearable devices like, rings, key fobs or bracelets for example.

Smart cards are portable small devices comprising a memory, a processor, and an operating system for computing treatments. They may comprise services applications like Payment, Access or Telecom applications. Such smart cards may comprise a plurality of memories of different types, like non-volatile memory and volatile memory. They are considered as tamper-resistant (or "secure") because they are able to control the access to the data they contain and to authorize or not the use of data by other machines. A smartcard may also provide computation services based on cryptographic components. In general, smartcards have limited computing resources and limited memory resources and they are intended to connect a host machine that provides them with electric power either in contact mode or in contactless mode. Some smart cards have their own embedded energy source.

Contact smart cards are usually designed to communicate according to at least one contact protocol like ISO/IEC7816 T=0 or T=1 communication protocols. Contactless smart cards are designed to communicate according to at least one contactless protocol like a protocol defined by ISO/IEC 14443 standard.

In some embodiments, the digital currency transaction is performed by transferring digital currency funds between an offline capable device and a user digital currency wallet. Each money transfer is formalized by a token specifying the corresponding number of digital currency units (i.e. the money amount). A Digital Currency Provider (DCP) is responsible for creating the tokens to be stored in the offline capable devices.

Digital money transfer is performed through the DCP that hosts an escrow wallet and updates the escrow wallet to reflect digital currency funds stored in the form of token(s) of a first type in the offline capable devices. The escrow wallet aggregates the amounts loaded on a fleet of offline capable devices.

In the present document, a digital currency wallet is an entity that stores credentials (like a password or a passphrase) allowing to retrieve, from a secure storage area, secret data (like a secret key or a private key) which is needed to create digital tokens (corresponding to a unit of digital currency) stored in a shared ledger.

In the present document, a digital currency purse is an entity that stores one or more tokens in a secure storage area like a secure element. These stored tokens represent the balance (expressed in digital currency) of the purse.

A digital currency purse stores token(s) of a first type while the balance of a digital currency wallet is updated using tokens of a second type different from the first type.

A digital currency wallet can be a so-called custodial wallet. Custodial wallets are controlled by a third-party entity, while non-custodial wallets allow for true self-custody. A custodial wallet is a wallet solution where a third party holds the secret data (e.g. private key) on behalf of the owner of the wallet. The third party can be a broker, an exchange, or a bank. A non-custodial wallet stores the secret data (like a private key) which is required to read or modify the balance of the digital currency wallet.

It can be noted that a client may pay a merchant by instructing their bank to transfer a certain amount of digital currency from their UDC wallet towards the UDC wallet of the merchant (which can be managed by another bank). Such a payment transaction does not involve the digital currency purse of the client.

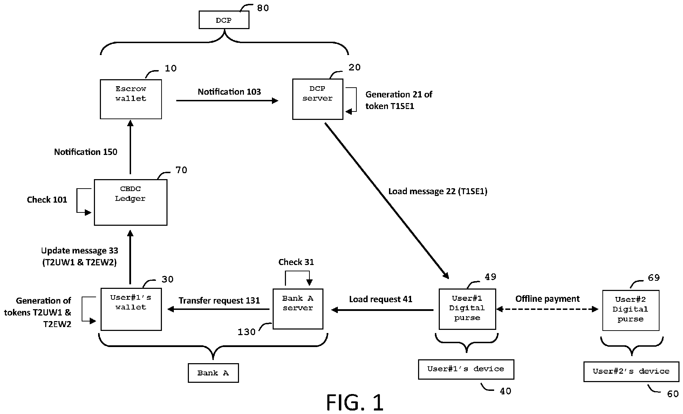

Figure 1 depicts a first exemplary flow diagram for managing the loading of digital money into an offline capable device according to an example of the invention.

A user has an offline capable device 40 (which may be or include a secure element) which stores an amount of digital currency in a digital currency purse 49. For instance, the device 40 can store a digital purse 49 whose balance reflects the current amount of digital currency available in the device 40.

The offline capable device 40 can be a portable hardware device. The digital currency purse 49 can store one or more digital currency tokens of the first type reflecting the current amount of digital currency available in the device 40.

The offline capable device 40 is able to participate to offline digital currency transfers with another offline capable device 60 (e.g. hardware secure element) hosting another digital purse. Both offline capable devices store their own digital currency token(s) of the first type and belong to the same offline digital currency system. They are called "offline capable" devices because they can perform a direct money transfer (e.g. a payment transaction) between their digital purses without requiring a connection to a network.

Before the very first loading into the offline capable device 40, the digital currency purse 49 can be in a state where it stores no token and has a current balance equal to zero.

A financial institution (e.g. Bank A) stores and manages a user digital currency wallet 30 (e.g. user's wallet in bank A) assigned to the user of the device 40. The user digital currency wallet 30 (also called UDC wallet) has been previously funded with digital currency using digital currency token(s) of a second type different from the first type of token. For instance, the balance of the UDC wallet 30 can be equal to 250 units of the digital currency.

It can be noted that the first and second types of tokens may differ in one or more of the following characteristics: the format, the nature of data contained in the token, the nature or version of the cryptographic algorithm used to protect or sign the token and the keyset or certificate used to protect or sign the token.

In the example of Fig. 1, the user wants to load a given money amount (i.e. load amount or loading amount) from their UDC wallet 30 to their digital currency purse 49 installed in the device 40. For instance, the load amount can be equal to 200 units of the digital currency.

In this example, it can be noted that both the UDC wallet 30 and the digital currency purse 49 are assigned to the same user.

In the context of a loading operation, the device 40 is online since it communicates with the bank's infrastructure that includes a bank server 130 and a UDC wallet 30 which can be hosted by the same bank server 130 or another bank server.

The device 40 (or the digital currency purse 49) sends a load request 41 to the bank server 130 (Bank A server).

Preferably, the load request 41 comprises an identifier of the device 40, an identifier of the digital currency purse 49, or an identifier of the UDC wallet 30.

Upon receipt of the load request 41, the Bank A server 130 checks the load request 41 is acceptable (for example by verifying that the balance of the UDC wallet 30 is higher than - or equal to - the requested load amount) then sends a transfer request 131 to the UDC wallet 30 to request the generation of both a payment token T2EW2 and a local token T2UW1 both being of the second type. The payment token T2EW2 reflects the loading amount to be considered on DCP side while the local token T2UW1 reflects the remaining amount in the UDC wallet 30. The remaining amount is equal to the previous balance of the UDC wallet 30 minus the amount to be loaded in the digital purse 49.

The payment token T2EW2 and the local token T2UW1 may comprise both a signature generated by the UDC wallet 30 and a reference to a previous token reflecting the balance of the UDC wallet 30 before the start of the loading operation.

Then, the UDC wallet 30 sends an update message 33 to the core ledger 70 to request storage of both the local token T2UW1 and the payment token T2EW2 in the core ledger.

The transfer request 33 may comprise an identifier of the digital currency purse 49 and/or and identifier of the device 40.

In turn, the core ledger 70 performs a validity check (ref. 101) of the two received tokens (T2UW1 and T2EW2) and if the validity check is successful, the core ledger 70 confirms the load transaction by formally recording said local token T2UW1 and payment token T2EW2 in the core ledger 70.

The DCP can comprise both an escrow wallet 10 and a hardware DCP server 20.

The escrow wallet 10 gets a notification 150 of the update of the core ledger. In some embodiments, the notification may be triggered by the core ledger 70 or the UDC 30 for instance. In some embodiments, the escrow wallet 10 can detect the notification 150 by itself polling the core ledger 70 from time to time.

In turn, the escrow wallet 10 sends a notification 103 (indicating the loading operation) to the DCP server 20 which generates (Ref. 21) a load token T1SE1 of the first type reflecting the loading amount and sends the load token T1SE1 to the device 40 through a load message 22.

Preferably, the load token T1SE1 comprises a signature generated by the DCP 80.

The DCP may send the load message 22 to the device 40 via a combination of public and/or private communication networks, including the Internet and a Telecom communication network.

Upon receipt of the load message 22, the digital currency purse 49 hosted in the device 40 performs a validity check of the load token T1SE1 and if the validity check is successful, updates its own digital currency balance by storing the load token T1SE1 in the non-volatile memory of the device 40. Advantageously, the digital currency purse 49 can trigger the display of message (on a user interface of the device 40) reflecting the success of the loading operation to warn the user.

Optionally, the DCP can also include a hardware security module (HSM) which can securely store secret keys (and/or certificates) assigned to the escrow wallet 10 and secret keys (or certificates) required to generate the load token T1SE1 of the first type. The escrow wallet 10 and the hardware DCP server 20 may also delegate encryption and decryption operations to the HSM.

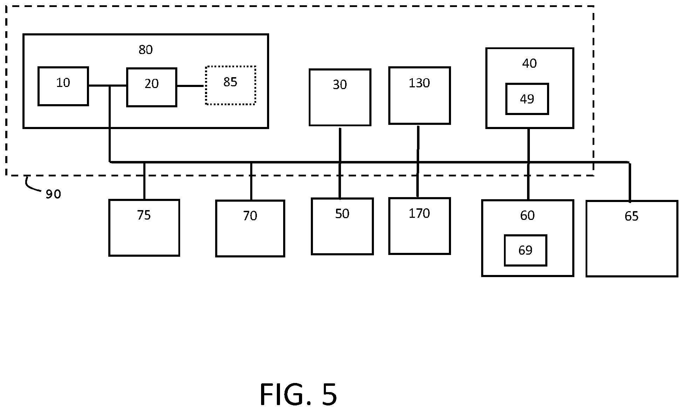

In some embodiments, the DCP can include a database 85 (Shown in Fig. 5) storing a link between the UDC wallet 30 and the device 40 (or between the UDC wallet 30 and the digital currency purse 49). Thus, the DCP server 20 can access the database 85 to retrieve an identifier of the UDC wallet 30 by using an identifier of the device. Alternatively, the DCP can access an external lookup server 75 (Shown in Fig. 5) storing the link between the UDC wallet 30 and the device 40 (or between the UDC wallet 30 and digital currency purse 49).

In some embodiments, a token of the first type can contain a reference to the parent token from which it comes, a money amount, and a signature. Thus, the tokens can be linked together and form a chain whose consistency can be checked a posteriori. Preferably, a token contains a signature of the entity which generated it.

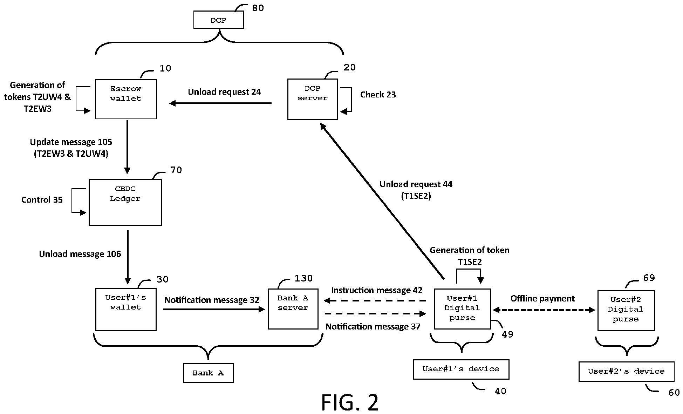

Figure 2 depicts a first exemplary flow diagram for managing the unloading of digital money from an offline capable device according to an example of the invention.

In the example of Fig. 2, the user wants to unload a given money amount from the digital currency purse 49 to the UDC wallet 30.

This scenario can happen when the balance of the digital currency purse 49 (hosted by the device 40) has reached a significant amount of digital currency and the user wishes to transfer part of this amount of digital currency to the UDC wallet 30 so as to be able to recover this amount on the UDC wallet 30. Afterwards, this amount may then be transferred from UDC wallet 30 to a bank account opened with the bank and assigned to the user.

The digital currency purse 49 generates an unload token T1SE2 of the first type reflecting the unloading amount and sends the unload token to the DCP 80. The digital currency purse 49 may send to the DCP server 20 an unload request 44 comprising the unload token T1SE2. In parallel, the device 40 may send to the bank server 130 an instruction message 42 to inform that an unload request from the digital currency purse 49 is in progress.

Preferably, the unload token T1SE2 comprises a signature generated by the digital currency purse 49.

The unload request 44 or the unload token T1SE2 may comprise an identifier of the digital currency purse 49 or and identifier of the UDC wallet 30.

Then, the DCP server 20 performs a validity check (Ref. 23) of the received unload token T1SE2 and if the validity check is successful, the DCP server 20 may send an unload request 24 to the escrow wallet 10. In turn, the escrow wallet 10 may generate both a payment token T2EW3 and a local token T2UW4 both being of the second type and reflecting the unloading operation.

The payment token T2EW3 reflects the withdrawal of the unloading amount from the escrow wallet 10 while the local token T2UW4 indicates the new balance of the escrow wallet 10.

Preferably, both the payment token T2EW3 and the local token T2UW4 comprise a signature generated by the DCP 80.

Then, the escrow wallet 10 sends to the core ledger 70 an update message 105 comprising both the payment token T2EW3 and the local token T2UW4.

In turn, the core ledger 70 performs a validity check (ref. 35) of the two received tokens (T2EW3 and T2UW4) and if the validity check is successful, the core ledger 70 confirms the unload transaction by formally recording said local token T2UW4 and payment token T2EW3 in the core ledger 70.

After that, the UDC wallet 30 (or the bank server 130) can receive an unload message 106 indicating that the money transfer has been recorded in the core ledger. In turn, the UDC wallet 30 may send to the bank server 130 a notification message 32 indicating the end of the unloading transaction.

In some embodiments, the bank server 130 may send a notification message 37 to the digital currency purse 49 (or to the device 40) to acknowledge completion of the unloading operation.

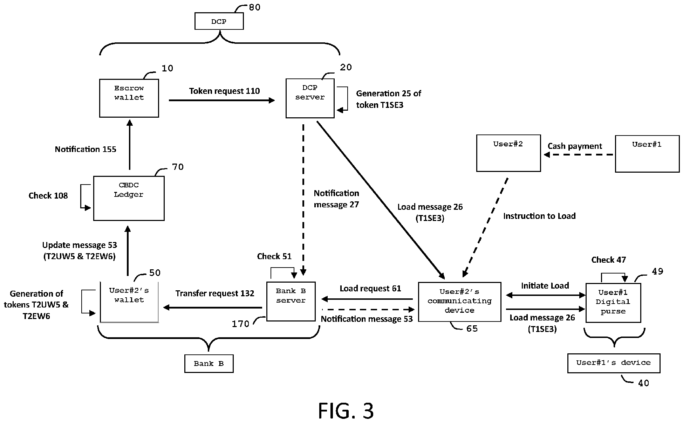

Figure 3 depicts a second exemplary flow diagram for managing the loading of digital money into an offline capable device according to an example of the invention.

A first user may want to load a given digital money amount to their device 40 (in fact in their digital currency purse 49) but where the origin of funds is not the first user's UDC wallet 30 but the UDC wallet of a second user.

In the example of Fig. 3, the first user provides money, for example cash (e.g. 55 units of the currency), to a second user (which can be a merchant for instance) and asks the second user to load the equivalent amount in digital money into the digital currency purse 49 installed in their device 40.

The second user has a communicating device 65 (also called second device) that has the ability to communicate with device 40 of the first user as well as remotely to the bank of the second user. The second user instructs communicating device 65 to perform a load, for the agreed amount, to the device 40 of the first user. Communicating device 65 connects to device 40 to initiate the procedure and, possibly, to obtain from device 40 the identifier of device 40 or of digital currency purse 49. The second device 65 sends a load request 61 to the server 170 of the second bank (i.e. bank B which is the bank of the second user).

The load request 61 can comprise both an identifier of the device 65 and an identifier of the digital currency purse 49 (or an identifier of the device 40) assigned to the first user. In practice, the device of the first user can send the identifier of the digital currency purse 49 to the device of the second user through any appropriate communication channel like NFC, BLE, QR code, a data conveyed through a telecom network.

Upon receipt of the load request 61, the bank server 170 (of the second user) checks (ref. 51) the load request 61 is acceptable (for example by verifying that the balance of the UDC wallet 50 assigned to the second user is higher than - or equal to - the requested load amount) . In case of successful check, the bank server 170 sends a transfer request 132 to the digital currency wallet 50 assigned to the second user. In turn, the digital currency wallet 50 generates both a payment token T2EW6 and a local token T2UW5 which are both of the second type. The payment token T2EW6 reflects the loading amount to be considered on DCP side while the local token T2UW5 indicates the new balance of the UDC wallet 50 after withdrawal of the loading amount.

Then the UDC wallet 50 sends to the core ledger 70 an update message 53 comprising the payment token T2EW6 and the local token T2UW5.

In turn, the core ledger 70 performs a validity check (Ref. 108) of the two received tokens and if the validity check is successful, the core ledger 70 records the payment token T2EW6 to formalize the loading amount in the escrow wallet 10 and records the local token T2UW5 reflecting the amount remaining in the UDC wallet 50.

When the escrow wallet 10 gets a notification 155 of the core ledger update, it sends a token request 110 to the DCP server 20. The token request 110 comprises the load amount. In turn, the DCP server 20 generates (Ref. 25) a load token T1SE3 of the first type reflecting the load amount and sends a load message 26 comprising the load token T1SE3 to the device 40 of the first user.

The notification 155 (received by the escrow wallet 10) may comprise a reference data allowing to identify the digital currency purse 49 of the first user. The reference data may be an identifier of the device 40 or an identifier of the digital currency purse 49for example. The DCP server 20 may obtain the identifier of the device 40 (or digital currency purse 49) from the reference data comprised in the token request 110.

In some embodiments, the DCP can send the load message 26 to the device 40 via any combination of public and/or private communication networks.

Upon receipt of the load message 26 by the device 40, the digital currency purse 49 performs a validity check (Ref. 47) of the load token T1SE3 and if the validity check is successful, updates its own digital currency balance by storing the load token T1SE3 in the non-volatile memory of the device 40. Advantageously, the digital currency purse 49 may trigger the display of message reflecting the success of the loading operation to warn the user via a user interface of the device 40.

Advantageously, the DCP server 20 may send a notification message 27 to the server of the second bank (or to the UDC wallet 50) which in turn may send to the communicating device 65 assigned to the second user a notification message 53 indicating the end of the load operation.

It can be noted that both the UDC wallet 50 and the digital currency purse 49 are assigned to two distinct users.

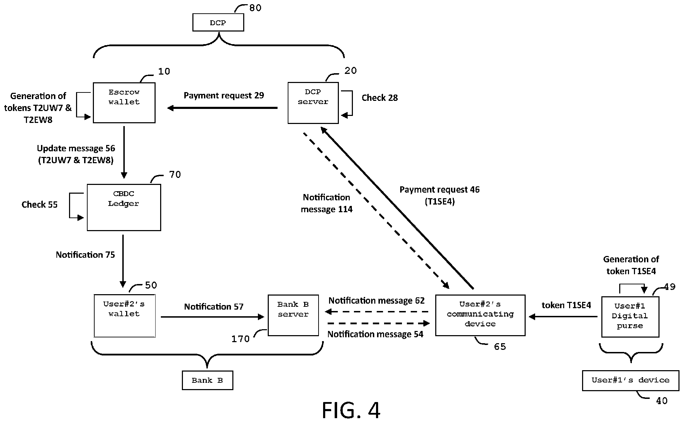

Figure 4 depicts a first exemplary flow diagram for managing payment using digital money stored into an offline capable device according to an example of the invention.

A first user (like a customer) may want to pay a given digital money amount, using the digital currency purse 49 installed in their device 40, to a second user (like a merchant) that does not have an offline capable device but rather has a UDC wallet 50. The second user may have a communicating device 65 that has the ability to communicate with device 40 of user 1 as well as remotely to the bank of the second user.

The payment may be initiated on the device 65 of user 2 or, in another embodiment, on the device 40 of the first user. Upon this initiation, the two devices will interact through an appropriate communication channel like NFC, BLE, QR code, or through a telecom network. The digital currency purse 49 (of the first user) generates a payment token T1SE4 of the first type reflecting the payment amount and sends said token to the device 65 of the second user. Device 65 sends a payment request 46 comprising the payment token T1SE4 to the DCP 80.

Upon receipt of the payment request 46, the DCP server 20 performs a validity check (ref. 28) of the payment token T1SE4 and if the validity check is successful, sends to the escrow wallet 10 of the DCP a payment request 29 specifying the payment amount.

In turn, the escrow wallet 10 generates a payment token T2EW8 and a local token T2UW7 both being of the second type and reflecting the payment amount. The payment token T2EW8 indicates the updated value of the balance of the escrow wallet 10. The local token T2UW7 reflects the amount paid to the UDC wallet 50 of the second user.

The escrow wallet 10 sends to the core ledger 70 an update message 56 comprising both the payment token T2EW8 and the local token T2UW7.

In some embodiments, the DCP server 20 may send a notification message 114 to the communicating device 65 which may route it to the digital currency purse 49 (or to the user's device 40) assigned to the first user to inform of the successful completion of the payment transaction (possibly after getting an acknowledgment from the core ledger).

In turn, the core ledger 70 performs a validity control (ref. 55) of the received tokens and, if the validity control is successful, stores the two received token to formalize the update of both the escrow wallet and the UDC wallet 50.

The UDC wallet 50 (or the server 170 of the second bank) may receive a notification 75 of the update of the core ledger 70. In turn, the UDC wallet 50 may send to the server 170 a notification 57 related to the end of the payment transaction.

In some embodiment, the server 170 of the second bank may send to the device 65 of the second user a notification message 54 indicating the successful completion of the payment transaction. Optionally, the device 65 of the second user may have sent to the bank server 170 a previous notification message 62 informing that a payment transaction is in progress for a certain amount.

In some embodiments, the user digital currency wallets hosted in bank servers can be custodial wallets or non-custodial wallets.

In some embodiments, the escrow wallet 10 of the DCP can be a custodial wallet or a non-custodial wallet.

In some embodiments, the core ledger 70 can be implemented using the UTXO (Unspent Transaction Output) cryptocurrency techniques, the Distributed Ledger Technology (DLT) or as a centralized ledger. Preferably, the core ledger is a CBDC ledger.

Figure 5 depicts a diagram of architecture of a system 90 for managing digital currency transactions according to an example of the invention.

The system 90 comprises a user digital currency (UDC) wallet 30 hosted in a first hardware server acting on behalf of a bank (Bank A) and a second server 130 assigned to the bank (Bank A). The first and second servers may be two separate servers or merged in a single one. The system 90 comprises a hardware device 40 hosting a digital currency purse 49, both assigned to the first user. The hardware device 40 is an offline capable device able to participate to offline digital currency transfers with another hardware device hosting another digital currency purse. These digital currency purses store one or more digital currency tokens of the first type.

Each of said hardware device can be a portable device like a smartphone, a table PC computer, a physical smart card, a payment ring, or a bracelet.

The UDC wallet 30 uses one or more digital currency tokens of a second type (different from the first type) for specifying its current balance. In some embodiments, the UDC wallet 30 stores a secret data (e.g. secret data and/or private key) allowing to access (read or write) its associated tokens stored in the core ledger 70.

The system 90 comprises a Digital Currency Provider DCP 80 that hosts an escrow wallet 10 and a hardware DCP server 20.

The system 90 is configured to perform a digital currency transaction by transferring digital currency funds between the device 40 and the UDC wallet 30 through the DCP. The DCP is configured to update the escrow wallet 10 to reflect digital currency funds stored in the form of one or more tokens of the first type in the device 40.

In some embodiments, the system 90 is configured to transfer a certain amount of digital currency from the UDC wallet 30 to the digital currency purse 49.

The digital currency wallet 30 can be configured to generate both a payment token T2EW2 of the second type reflecting the loading amount to be added to the current balance of the escrow wallet 10 and a local token T2UW1 of the second type which reflects the remaining amount in the digital currency wallet 30. The digital currency wallet 30 can be configured to send said payment token and local token to a core ledger 70.

In turn, the core ledger 70 can be configured to perform a validity check of both the payment token and the local token and if the validity check is successful, to accept these two tokens and to store the payment token and the local token.

Once the core ledger 70 has validated the payment token and the local token, the DCP can be configured to generate a load token T1SE1 of the first type reflecting the loading amount and to send the load token to the first device 40. Upon receipt of the load token, the first digital currency purse 49 can be configured to perform a validity check of the received load token and if the validity check is successful, to store the load token to complete the loading transaction.

In some embodiments, the bank server 130 can be designed to check if the load request 41 (coming from the user's device 40) is acceptable and to send a transfer request 131 to the UDC wallet 30 to request the generation of both the payment token T2EW2 and the local token T2UW1 needed to pursue the loading transaction.

In some examples, the UDC wallet 30 and the digital currency purse 49 can be both assigned to a same user.

In some examples, the system 90 can be configured to transfer a certain amount of digital currency from a UDC wallet 50 assigned to user different from the user to which the digital currency purse 49 is assigned.

In some embodiments, the system 90 can be configured to transfer a certain amount of digital currency from the digital currency purse 49 to the UDC wallet 30. The digital currency purse 49 and the UDC wallet 30 are both assigned to a same user.

The digital currency purse 49 can be configured to generate an unload token T1SE2 of the first type reflecting the unloading amount and to send said unload token to the DCP.

The DCP can be configured to perform a validity check of the unload token and if the validity check is successful, the DCP can be configured to generate both a payment token (T2EW3) and local token (T2UW4) both of the second type. The local token (T2UW4) indicates a new balance of the digital currency wallet 30 and the payment token (T2EW3) reflects the withdrawal of the unloading amount from the balance of the escrow wallet.

A core ledger 70 can be configured to receive from the DCP both said payment token (T2EW3) and local token (T2UW4) and to check the validity of the two received tokens and to store the payment token (T2EW3) and local token (T2UW4) is their validity has been a successful checked.

In some embodiments, the system 90 can be configured to transfer a certain amount of digital currency from the digital currency purse 49 assigned to a first user to the UDC wallet 50 assigned to another user. For instance, the first user can be a customer while the second user can be a merchant.

The digital currency purse 49 can be configured to generate a payment token of the first type reflecting a payment amount and to send this payment token to the DCP 80.

The DCP can be configured to perform a validity check of the payment token and if the validity check is successful, the DCP can be configured to generate a payment token (T2EW8) and a local token (T2UW7) both of the second type. The payment token (T2EW8) reflects the update (corresponding to the payment amount) of the balance of the escrow wallet 10. The local token (T2UW7) reflects the update of the balance of the digital currency wallet 50.

The DCP can be configured to send both said payment token (T2EW8) and local token (T2UW7) to a core ledger 70. The core ledger 70 can be configured to check the validity of the two received tokens and to store the payment token (T2EW8) and local token (T2UW7) in case of successful check.

In some embodiments, the hardware server hosting the UDC wallet 30 and the server 130 can be hardware servers or a computer machines comprising a hardware processor and storing program instructions intended to be executed by the processor to provide the features required by the embodiments of the invention.

In some embodiments, the DCP can include a hardware DCP server 20 which can be a hardware server or a computer machine comprising a hardware processor and program instructions intended to be executed by the processor to provide the services and operations according to the invention.

The escrow wallet 10 and the DCP server 20 can be configured to exchange messages and to synchronize operations. The escrow wallet 10 can be responsible to generate tokens of the second type while the DCP server 20 can be responsible to generate tokens of the first type.

In some embodiments, the DCP 80 can comprise a database 85 storing a link between the UDC wallet 30 and the device 40 (or the digital currency purse 49). Thus, the DCP server 20 can be configured to access the database 85 to retrieve an identifier of the UDC wallet 30 by using an identifier of the device 40 (or an identifier of the purse 49).

In some embodiments, the DCP 80 can be configured to access an external lookup server 75 storing the link between the UDC wallet 30 and the device 40 (or of the purse 49).

In some embodiments, the digital currency is a Central Bank Digital Currencies (CBDC) issued by a central bank. Alternatively, the digital currency can be shared between several financial institutions that delegate responsibility for issuing digital money to an external trusted entity or one of them.

Although described as hosted by a bank server in the above-presented embodiments and examples, a UDC wallet can be hosted in variety of hardware appliances. For example, a UDC wallet can be hosted in a portable apparatus belonging to the user like a phone or a table PC computer. For some users like merchants, their UDC wallet can be hosted in a payment terminal installed in their store or in a portable apparatus belonging to them.

The invention is not limited to the described embodiments or examples. In particular, the described features of the presented embodiments may be combined as can be understood by those skilled in the art. A device can embed more than one digital currency purse, or a user may have more than one UDC wallet.

Thanks to some embodiments of the invention, the digital currency framework of the entity responsible for issuing digital money can interface with another framework allowing to manage digital currency on a fleet of offline capable devices, both frameworks relying on different types of tokens.

Thanks to some embodiments of the invention, the cryptographic algorithms and cryptographic data used in the offline system can be compatible with an implementation with processors, such as Secure Elements, having limited computing power and limited memory size embedded in offline capable devices such as smart cards.

An advantage of some embodiments of the invention is to preserve the integrity of the core ledger system since digital money does not disappear from the core ledger when loaded in offline capable devices. The chain of payments is not broken when loading funds in an offline capable device nor when unloading funds from such a device.

Thanks to some embodiments of the invention, the DCP can keep an accurate view of the funds in circulation in devices of the offline system.

An advantage of some embodiments of the invention is to provide an entire system which is able to both transfer digital cash from the core ledger to devices of an offline system, to enable this transfer while maintaining the integrity of the core ledger and to ensure the security and integrity of this transfer.

## Claims

1. A computer-implemented method for performing a digital currency transaction involving a first hardware device (40) hosting a first digital currency purse (49),
wherein the first device is able to participate to offline digital currency transfers with a second hardware device (60) hosting a second digital currency purse (69), each of said first and second purses storing one or more digital currency tokens of a first type (T1),
wherein a digital currency wallet (30, 50) stores one or more digital currency tokens of a second type (T2) different from said first type, said digital currency wallet being hosted by a hardware server acting on behalf of a bank,
wherein the digital currency transaction is performed by transferring digital currency funds between said first purse (49) and said digital currency wallet through a Digital Currency Provider, DCP, (80) hosting an escrow wallet (10), and
wherein the DCP updates the escrow wallet to reflect digital currency funds stored in the form of one or more tokens of first type in said first purse (49).

2. The method according to claim 1, wherein the digital currency transaction is a transfer of a loading amount from the digital currency wallet (30, 50) to the first purse (49),
wherein the digital currency wallet generates both a payment token (T2EW2) of the second type reflecting the loading amount to be added to a balance of the escrow wallet and a local token (T2UW1) of the second type which reflects a remaining amount in the digital currency wallet (30) and sends said tokens to a core ledger (70),
wherein, the core ledger performs a validity check of the payment token and the local token and if the validity check is successful, the core ledger stores the payment token and the local token,
wherein the DCP generates a load token (T1SE1) of the first type reflecting said loading amount and sends the load token to the first device (40), and
wherein the first digital currency purse (49) performs a validity check of the load token and, if the validity check is successful, stores the load token.

3. The method according to claim 2, wherein the digital currency wallet (30) and the first purse (49) are both assigned to a same user.

4. The method according to claim 3, wherein the DCP accesses a lookup server (75) or a database (85) to retrieve an identifier of the digital currency wallet (30) by using an identifier of the first device (40) or an identifier of the first digital currency purse (49).

5. The method according to claim 2, wherein the first purse (49) is assigned to a first user and the digital currency wallet (50) is assigned to a second user different from the first user.

6. The method according to claim 1, wherein the digital currency transaction is a transfer of an unloading amount from the first purse (49) to the digital currency wallet (30),
wherein the digital currency wallet and the first purse (49) are both assigned to a same user,
wherein the first purse (49) generates an unload token (T1SE2) of the first type reflecting the unloading amount and sends said unload token to the DCP,
wherein, the DCP performs a validity check of the unload token and if the validity check is successful, the DCP generates a payment token (T2EW3) and local token (T2UW4) both of the second type the local token (T2UW4) indicating a new balance of the digital currency wallet (30) and the payment token (T2EW3) reflecting the withdrawal of the unloading amount from the escrow wallet,
wherein a core ledger (70) receives from the DCP both said payment token (T2EW3) and local token (T2UW4), performs a validity control of both the payment token (T2EW3) and the local token (T2UW4) and, if the validity control is successful stores the payment token (T2EW3) and local token (T2UW4).

7. The method according to claim 1, wherein the digital currency transaction is a transfer of a payment amount from the first purse (49) to the digital currency wallet,
wherein the first purse (49) is assigned to a first user and the digital currency wallet (50) is assigned to a second user different from the first user,
wherein the first purse (49) generates a payment token (T1SE4) of the first type reflecting a payment amount and sends said payment token to the DCP,
wherein, the DCP performs a validity check of the payment token and if the validity check is successful, the DCP generates a payment token (T2EW8) and a local token (T2UW7) both of the second type, said payment token (T2EW8) reflecting the update of a balance of the escrow wallet (10) corresponding to the payment amount and said local token (T2UW7) reflecting the update of a balance of the digital currency wallet (50),
wherein a core ledger (70) receives from the DCP both said payment token (T2EW8) and local token (T2UW7) and stores the payment token (T2EW8) and local token (T2UW7) after a successful checking that both said payment token (T2EW8) and local token (T2UW7) are valid.

8. The method according to any preceding claims, wherein the digital currency transaction is a Central Bank Digital Currency transaction.

9. A system (90) for performing a digital currency transaction involving a first hardware device (40) hosting a first digital currency purse (49), said system comprising the first device and a digital currency wallet,
wherein the first device is able to participate to offline digital currency transfers with a second hardware device (60) hosting a second digital currency purse (69), each of said first and second purses storing one or more digital currency tokens of a first type (T1),
wherein the digital currency wallet (30, 50) uses one or more digital currency tokens of a second type (T2) different from said first type, said digital currency wallet being hosted by a hardware server acting on behalf of a bank,
wherein the system comprises a Digital Currency Provider, DCP, (80) hosting an escrow wallet (10),
wherein the system is configured to perform the digital currency transaction by transferring digital currency funds between said first purse (49) and said digital currency wallet through the DCP, and
wherein the DCP is configured to update the escrow wallet (10) to reflect digital currency funds stored in the form of one or more tokens of first type in said first purse (49).

10. The system according to claim 9, wherein the digital currency transaction is a transfer of a loading amount from the digital currency wallet (30, 50) to the first purse (49),
wherein the digital currency wallet is configured to generate both a payment token (T2EW2) of the second type reflecting the loading amount to be added to a balance of the escrow wallet and a local token (T2UW1) of the second type which reflects a remaining amount in the digital currency wallet (30) and to send said payment token and local token to a core ledger (70),
wherein, the core ledger is configured to perform a validity check of both the payment token and the local token and if the validity check is successful, the core ledger is configured to store the payment token and the local token,
wherein the DCP is configured to generate a load token (T1SE1) of the first type reflecting said loading amount and to send the load token to the first device (40), and
wherein the first purse (49) is configured to perform a validity check of the load token and if the validity check is successful, to store the load token.

11. The system according to claim 9, wherein the digital currency wallet (30) and the first purse (49) are both assigned to a same user.

12. The system according to claim 9, wherein the first purse (49) is assigned to a first user and the digital currency wallet (50) is assigned to a second user different from the first user.

13. The system according to claim 9, wherein the digital currency transaction is a transfer of an unloading amount from the first purse (49) to the digital currency wallet (30),
wherein the digital currency wallet and the first purse (49) are both assigned to a same user,
wherein the first purse (49) is configured to generate an unload token (T1SE2) of the first type reflecting the unloading amount and to send said unload token to the DCP,
wherein, the DCP is configured to perform a validity check of the unload token and if the validity check is successful, the DCP is configured to generate a payment token (T2EW3) and local token (T2UW4) both of the second type, the local token (T2UW4) indicating a new balance of the digital currency wallet (30) and the payment token (T2EW3) reflecting the withdrawal of the unloading amount from the escrow wallet,
wherein a core ledger (70) is configured to receive from the DCP both said payment token (T2EW3) and local token (T2UW4) and to store the payment token (T2EW3) and local token (T2UW4) after a successful check of their validity.

14. The system according to claim 9, wherein the digital currency transaction is a transfer of a payment amount from the first purse (49) to the digital currency wallet,
wherein the first purse (49) is assigned to a first user and the digital currency wallet (50) is assigned to a second user different from the first user,
wherein the first purse (49) is configured to generate a payment token (T1SE4) of the first type reflecting a payment amount and to send said payment token to the DCP,
wherein, the DCP is configured to perform a validity check of the payment token and if the validity check is successful, the DCP is configured to generate a payment token (T2EW8) and a local token (T2UW7) both of the second type, said payment token (T2EW8) reflecting the update of a balance of the escrow wallet (10) corresponding to the payment amount and said local token (T2UW7) reflecting the update of a balance of the digital currency wallet (50),
wherein a core ledger (70) is configured to receive from the DCP both said payment token (T2EW8) and local token (T2UW7) and to store the payment token (T2EW8) and local token (T2UW7) after a successful check of their validity.
